# EUROPEAN PATENT APPLICATION

(11) **EP 4 621 217 A1**
(43) Date of publication of application: **24.09.2025**
(21) Application number: 24164165.3
(22) Date of filing: 18.03.2024
(51) Int. Cl.: F03D 7/02

(54) **METHOD FOR OPERATING A WIND TURBINE, CONTROL DEVICE FOR OPERATING A WIND TURBINE, COMPUTER-IMPLEMENTED METHOD AND COMPUTER PROGRAM PRODUCT**

(71) Applicant: Nordex Energy SE & Co. KG, 22419 Hamburg (DE)
(72) Inventor: STEUDEL, Dirk, 22419 Hamburg (DE); REINWARDT, Inga, 22419 Hamburg (DE); NISS, Michael, 22419 Hamburg (DE); KADAJJI, Keerthan, 22419 Hamburg (DE)
(74) Representative: Epping - Hermann - Fischer

(57) **Abstract**

A method for operating a wind turbine (1) operable in various operating conditions is specified, each operating condition being characterized by at least one performance parameter value, a turbulence indicator safety function being associated with the wind turbine (1) and defining maximum allowable turbulence indicator (TIₘₐₓ) values depending on the operating condition and a wind speed, wherein the method comprises at least the following steps:
A) determining the current operating condition,
B) estimating the current wind speed,
C) evaluating a current TIₘₐₓ value linked to the current operating condition and the current wind speed,
D) determining a current turbulence indicator estimation (TIₑₛₜ) value representative of a current wind turbulence,
E) comparing the current TIₑₛₜ value to the current TIₘₐₓ value, wherein, in case the current TIₑₛₜ value exceeds the current TIₘₐₓ value, the current operating condition is adapted to a safe operating condition, associated with a TIₘₐₓ value that is equal to or exceeds the current TIₑₛₜ value.

Furthermore, a control device (10) for operating a wind turbine (1), a computer-implemented method (30) and a computer program product (40) are specified.

## Description

Embodiments of the present invention are related to a method for operating a wind turbine. Further embodiments are related to a control device for operating a wind turbine, a computer-implemented method and a computer program product. Preferably, the method and the control device are configured for preventing the wind turbine from being damaged by extreme wind turbulences.

When operating a wind turbine, for instance the rotation speed of the rotor must be controlled for efficient power generation on the one hand, and, on the other hand, to keep the wind turbine components within speed and torque limits in order to avoid damage to the components.

At least one object of particular embodiments is to provide a method for operating a wind turbine, in particular in the presence of wind turbulences. Further objects of particular embodiments are to provide a control device for operating a wind turbine, a computer-implemented method and a computer program product.

These objects are achieved by methods and subject-matters according to the independent claims. Advantageous embodiments and developments of the methods and the subject-matters are characterized in the dependent claims, and are also disclosed by the following description and the drawings.

According to at least one embodiment, a method for operating a wind turbine is specified. The method can, in particular, take into account wind turbulences that could negatively affect the wind turbine. According to at least one further embodiment, an operating device for operating a wind turbine is specified. Preferably, the control device is configured for carrying out the method for operating the wind turbine. The features and embodiments described before and in the following equally apply to the method and to the operating device.

Furthermore, the method for operating a wind turbine can be a computer-implemented method. In other words, a computer-implemented method can be specified that can comprise one or more or all of the steps and features described herein in connection with the method for operating a wind turbine, so that, preferably, the computer-implemented method can comprise the method for operating a wind turbine. Furthermore, a computer program product can be specified, wherein the computer program product comprises instructions which, when the computer program product is executed by a computer or computer system of more than one computer, cause the computer or computer system to carry out the method for operating a wind turbine. The features and embodiments described before and in the following in connection with the method for operating a wind turbine and in connection with the operating device also apply to the computer-implemented method and to the computer program product.

A "wind turbulence" can generally refer to rapid fluctuations in wind speed and/or direction, in particular at the location of the wind turbine. Wind turbulences can usually be considered nearly chaotic and, thus, are difficult to predict. A usual model for the wind turbulence is the turbulence intensity model, according to which the turbulence intensity is defined by the ratio of a variation, in particular the standard deviation, of the current wind speed estimated in a predetermined time interval and a mean value of the current wind speed estimated in said predetermined time interval. Here and in the following, "wind speed" and "wind speed at the location of the wind turbine" can denote the wind speed that occurs, for instance, at the wind turbine rotor or upstream of the wind turbine rotor.

An extreme wind turbulence can cause extremely high loads and tower clearance issues. The term "extreme wind turbulence" can, in particular, refer to the worst-case wind turbulence for a duration of 10 minutes over the course of 50 years. As the definition of the wind turbulence depends on the wind speed, an extreme wind turbulence is the maximum turbulence value for each wind speed that occurs once in 50 years. Extreme wind turbulences are usually considered in the design of wind turbines. However, since wind turbulences and, in particular, extreme wind turbulences can depend on the local conditions of the wind turbine site, site-specific values often exceed the design values.

For instance, site-specific extreme wind turbulences can exceed the design values for certain wind speeds as, for example, a certain wind speed range. As a consequence, according to the prior art the operation of the wind turbine is permanently curtailed for those wind speeds, although extreme wind turbulences are very rare events. Consequently, in the presence of said certain wind speeds the wind turbine generates most of the time less electrical power than it actually could and at the same time the wind turbine may be susceptible to damage due to extreme load conditions, if no action is taken to reduce the load.

According to a further embodiment, the wind turbine is operable in various operating conditions, wherein each operating condition is characterized by a value of at least one performance parameter of the wind turbine. The performance parameter can, in particular, be a parameter influencing a load acting on the wind turbine. Preferably, the at least one performance parameter comprises at least one of a generated power, a rotor speed and a rotor torque. By controlling and adapting the at least one performance parameter, the operating condition of the wind turbine can be controlled and adapted.

For instance, the at least one performance parameter can be controlled in discrete steps. This can mean that a plurality of discrete values, representing said steps, is predetermined for the at least one performance parameter, and the at least one performance parameter can be chosen from said predetermined finite number of values. Consequently, the various operating conditions can be a plurality of discrete operating conditions and a change of the operating condition can be carried out stepwise. Alternatively, the at least one performance parameter can be controlled continuously. This can mean that a value of the at least one performance parameter can be chosen from a continuous range of values, so that the at least one performance parameter can be continuously controlled over said predetermined range. The term "continuous" includes a quasi-continuous distribution of values that can be caused, for instance, by digital data processing. Consequently, the various operating conditions can comprise a continuous range of operating conditions and a change of the operating condition can be carried out continuously.

According to a further embodiment, a turbulence indicator is used in the method. In particular, a turbulence indicator safety (TI_{safe}) function is associated with the wind turbine, the turbulence indicator safety function defining maximum allowable turbulence indicator (TIₘₐₓ) values depending on the operating condition and a wind speed at a location of the wind turbine. In other words, the TI_{safe} function defines a limit value of the turbulence indicator that must not be exceeded to ensure safe operation of the wind turbine, wherein said limit value depends on the current operating condition of the wind turbine. Furthermore, said limit value can depend on the current wind speed.

The turbulence indicator, for instance the turbulence indicator of the TI_{safe} function, can be an information indicative and/or representative of a wind turbulence. The turbulence indicator can be, for instance, a turbulence intensity according to the turbulence intensity model described above, i.e., a ratio of the standard deviation of the wind speed to the mean wind speed over a predetermined time interval. However, the turbulence indicator is not limited to that turbulence intensity model. For example, the turbulence indicator can result from a combination of a turbulence intensity and a wind speed. For instance, the turbulence indicator can be the turbulence intensity multiplied by a function of the wind speed like, for instance, the wind speed to the power of three.

According to a further embodiment, the current operation condition of the wind turbine is determined. The control device for operating the wind turbine can comprise an operating condition determination unit for determining the current operating condition of the wind turbine.

Furthermore, the current wind speed at the location of the wind turbine can be estimated. The control device for operating the wind turbine can comprise a wind speed estimation unit for estimating the current wind speed. For instance, the wind turbine can be equipped with an anemometer for measuring the wind speed. Furthermore, other known methods for estimating the wind speed are possible. For example, the wind speed can be estimated based on one or more parameters like rotor speed, active power, pitch angle and air density.

According to a further embodiment, the TI_{safe} function can be used to evaluate the current TIₘₐₓ value, i.e., the TIₘₐₓ value that is linked to the current operating condition and the current wind speed. The control device for operating the wind turbine can comprise an evaluation unit for evaluating the current TIₘₐₓ value linked to the current operating condition and the current wind speed.

According to a further embodiment, a current turbulence indicator estimation (TIₑₛₜ) value representative of a current wind turbulence at the location of the wind turbine can be determined. The control device for operating the wind turbine can comprise a calculating unit for determining the current TIₑₛₜ value. For instance, the TIₑₛₜ value can be determined based on the estimated current wind speed, for example when the turbulence indicator depends on the wind speed as described above. However, alternative methods of determining the TIₑₛₜ value, which are not based on the estimated current wind speed, can also be possible.

According to a further embodiment, the current TIₑₛₜ value is compared to the current TIₘₐₓ value. The control device for operating the wind turbine can comprise a comparation unit for comparing the current TIₑₛₜ value to the current TIₘₐₓ value. In particular, it can be determined whether the current TIₑₛₜ value exceeds the current TIₘₐₓ value or not. In case the current TIₑₛₜ value exceeds the current TIₘₐₓ value, the current operating condition can be adapted to a safe operating condition. An operating condition is considered safe when the operating condition is associated with a TIₘₐₓ value that is equal to or exceeds the current TIₑₛₜ value for the current wind speed according to the TI_{safe} function. Preferably, the safe operating condition corresponds to an operating condition associated with the TIₘₐₓ value which is closest to the TIₑₛₜ value for the current wind speed. The control device for operating the wind turbine can comprise a control unit for adapting the operating condition of the wind turbine.

According to a preferred embodiment, the method for operating the wind turbine comprises at least the following steps:
A) determining the current operating condition of the wind turbine,
B) estimating the current wind speed at the location of the wind turbine,
C) evaluating a current TIₘₐₓ value linked to the current operating condition and the current wind speed by using the turbulence indicator safety function,
D) determining a current turbulence indicator estimation (TIₑₛₜ) value representative of a current wind turbulence at the location of the wind turbine,
E) comparing the current TIₑₛₜ value to the current TIₘₐₓ value, wherein, in case the current TIest value exceeds the current TIₘₐₓ value, the current operating condition is adapted to a safe operating condition, associated with a TIₘₐₓ value that is equal to or exceeds the current TIₑₛₜ value for the current wind speed according to the turbulence indicator safety function.

According to a further embodiment, for instance in step E, the current operating condition is adapted to the safe operating condition by de-rating at least one performance parameter. In particular, the setpoint of the at least one performance parameter that is used to control the power parameter can be adapted. Consequently, the current operating condition can be adapted to the safe operating condition by de-rating at least one performance parameter setpoint, in particular by de-rating at least one of a generator power setpoint, a rotor speed setpoint, a rotor torque setpoint and change in a pitch angle. Preferably, the current operating condition is adapted to the safe operating condition by de-rating two performance parameter setpoints, in particular by de-rating two setpoints chosen from the generator power setpoint, the rotor speed setpoint, the rotor torque setpoint and change in a pitch angle. Likewise, the current operating condition may be changed to a previous operating condition once the current TIₑₛₜ value drops below the current TIₘₐₓ value. This can mean that, in case the current TIₑₛₜ value does not exceed the current TIₘₐₓ value in step E, it can be determined whether it is possible to raise at least one performance parameter setpoint. This can imply that it can be determined whether there is an operating condition, for example a previous operating condition, with at least one higher performance parameter setpoint that is associated with a lower TIₘₐₓ value for the current wind speed according to the TI_{safe} function, wherein, however, the TIₑₛₜ value still does not exceed said lower TIₘₐₓ value and, thus, is still a safe operating condition. For example, if more power generated by the wind turbine is desired, it can determined whether it is possible that the operating condition can be adapted to said safe operating condition.

Particularly preferably, the steps described herein, for instance the steps A to E, are performed continuously, so that it is possible to adapt the current operating condition dynamically. If the wind turbine shall be operated to produce the maximum power without the TIₑₛₜ value exceeding the TIₘₐₓ value, preferably the operating condition can be dynamically adapted to a current safe operating condition.

According to a further embodiment, the TI_{safe} function is determined by a plurality of predetermined TImax values associated with different wind speeds and/or different operating conditions. Preferably, the TI_{safe} function can be determined, for a predetermined wind speed of a range of wind speeds, by at least two predetermined TIₘₐₓ values. The at least two predetermined TIₘₐₓ values can comprise a first predetermined TIₘₐₓ value for the predetermined wind speed and a first predetermined operating condition and a second predetermined TIₘₐₓ value for the predetermined wind speed and a second predetermined operating condition different from the first operating condition. TIₘₐₓ values other than the at least two predetermined TIₘₐₓ values can be determined by interpolation. The interpolation may be, but is not limited to, a linear interpolation according to preferred embodiments, or a non-linear interpolation according to further preferred embodiments. The result is a two-dimensional TI_{safe} function associated with a certain wind speed. The same determination can be done for several wind speeds, so that a plurality of two-dimensional TI_{safe} functions can be determined, each of the plurality of two-dimensional TI_{safe} functions being linked to a certain wind speed. In particular, at least two wind speeds and, thus, two two-dimensional TI_{safe} functions are to be determined. By interpolation, for instance linear interpolation, of the wind speed, the TI_{safe} function for the method described herein can be determined as a three-dimensional function providing TIₘₐₓ values depending on the wind speed and the operating condition.

The TI_{safe} function can be a continuous function, in particular associated with a continuously operable operating condition. In other words, the current operating condition can be adapted to the safe operating condition by continuously adapting at least one performance parameter setpoint. Alternatively, in case the operating condition is operated in steps by adapting at least one performance parameter setpoint in a step-wise fashion, the TI_{safe} function can be a step function.

Preferably, the first predetermined operating condition is a maximum allowable operating condition of the wind turbine determined by a maximum allowable performance parameter value for the associated wind speed. Furthermore, the second predetermined operating condition can correspond to a safe-mode operating condition. Moreover, according to preferred embodiments, the safe-mode operating condition can correspond to constant setpoints and, according to further preferred embodiments, the safe-mode operating condition may lead to a load-neutral shut-down process. The load-neutral shut-down process prevents inducement of higher loads than the operational loads. Consequently, the method can comprise an additional step of comparing the current Turbulence intensity estimation value (hereinafter referred to as 'TIₑₛₜ value') to a predetermined TI_{cutout} value, which is dependent on the wind speed. In case the current TIₑₛₜ value exceeds the TI_{cutout} value for the current wind speed, the current operating condition is adapted to the cut-out operating condition in which the wind turbine is shut down.

The method described herein can prevent a wind turbine from being damaged by extreme loads due to extreme wind turbulences. In particular, the method allows locating the wind turbine at a certain site and an optimization of the generated power independently from site-specific extreme wind turbulences.

Further advantages, advantageous embodiments and further developments are revealed by the embodiments described below in connection with the figures.
Figure 1 shows a schematic illustration of a wind turbine,
Figure 2A shows a schematic illustration of a control device for operating a wind turbine according to an embodiment,
Figure 2B shows a schematic illustration of method steps of a method for operating a wind turbine according to a further embodiment,
Figures 3 and 4 shows schematic illustrations the TI_{safe} functions according to further embodiments.

In the embodiments and figures, identical, similar or identically acting elements are provided in each case with the same reference numerals. The elements illustrated and their size ratios to one another should not be regarded as being to scale, but rather individual elements, such as for example layers, components, devices and regions, may have been made exaggeratedly large to illustrate them better and/or to aid comprehension.

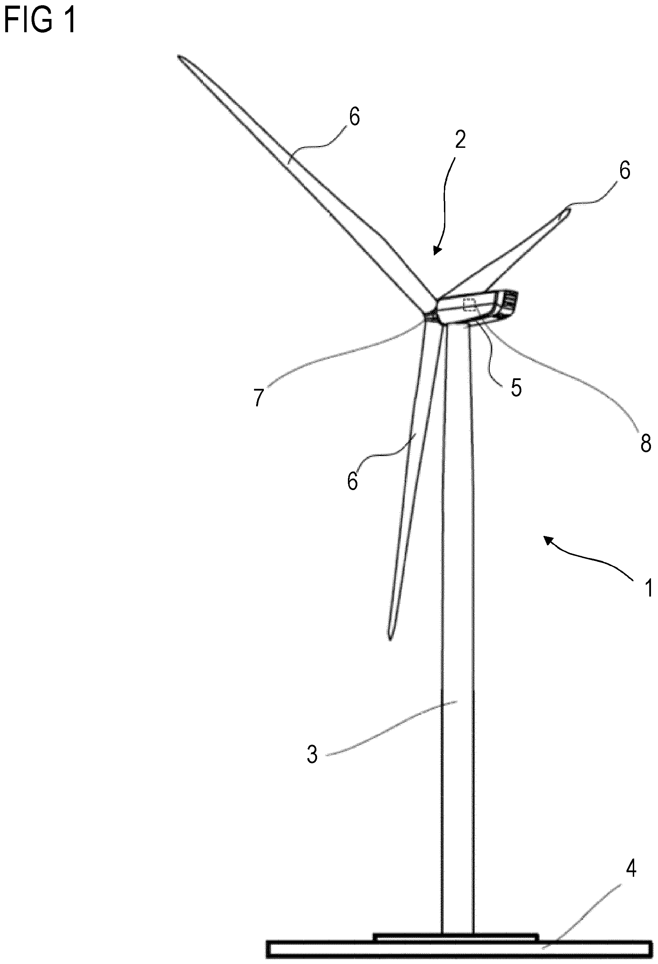

Figure 1 shows a wind turbine 1 which comprises a rotor 2 mounted to a tower 3. The tower 3 is fixed to the ground by means of a foundation 4. The rotor 2 comprises one or more (wind turbine) rotor blades 6, which are arranged on a rotor hub 7 mounted to a nacelle 5. The nacelle 5 is rotatably mounted at one end of the tower 3 opposite to the ground. The nacelle 5 houses, for example, a generator (not shown) which is coupled to the rotor 2 via a rotor shaft and, if necessary, a gearbox (not shown).

During operation, the rotor 2 is set in rotation by an air flow, for example wind. This rotational movement is transmitted to the generator via a drive train comprising, inter alia, the rotor shaft and, if necessary, the gearbox. The generator converts the mechanical energy of the rotor 2 into electrical energy.

For optimizing the energy output of the wind turbine 1, the nacelle 5 has to be rotated into the wind. Moreover, the pitch angles of the rotor blades 6 have to be set according to the wind speed. This is done with the help of drives (not shown) which rotate the rotor blades 6 and the nacelle 5 to a respective target position. In order to control and operate the drives, the wind turbine 1 comprises a wind turbine controller 8 comprising a drive control system which determines operating setpoints with which the drives are operated. As indicated in Figure 1, the wind turbine controller 8 can be located in the nacelle 5.

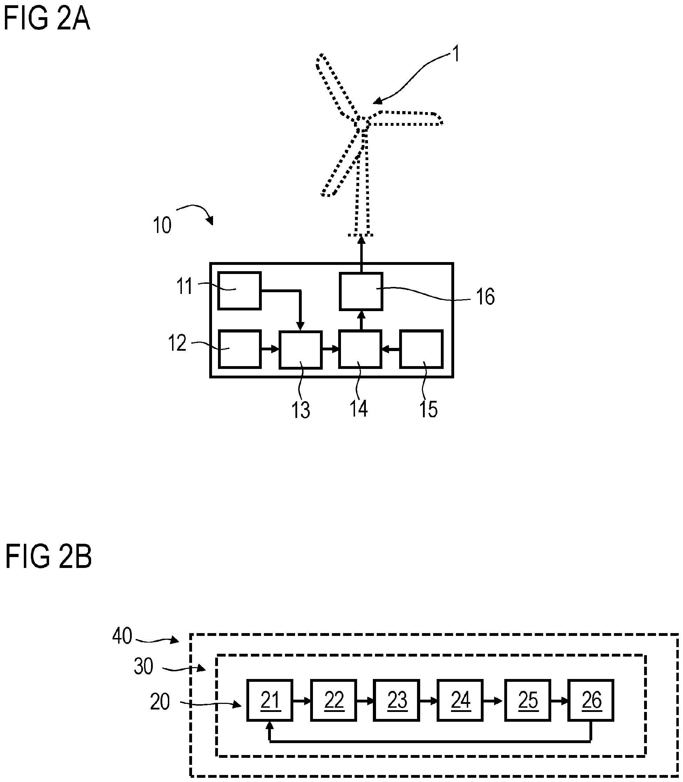

Figure 2A shows in a schematic illustration, an embodiment of a control device 10 for operating a wind turbine 1. The wind turbine 1 is merely indicated by dotted lines and can be embodied as described in connection with Figure 1. For instance, the control device 10 or at least several components of the control device 10 can be a part of the wind turbine 1 and, in particular, of the controller described above and, thus, can be located in the nacelle of the wind turbine 1. Alternatively, it can also be possible that one or more components of the control device 10 are located outside the wind turbine 1, for instance in a control station separate from the wind turbine 1. For illustrative purposes, Figure 2A shows the control device 10 drawn next to the wind turbine 1.

Figure 2B shows a schematic illustration of a method 20 for operating a wind turbine. In particular, the method 20 can be carried out by the control device 10 shown in Figure 2A. The following description equally applies to the control device 10 of Figure 2A and to the method 20 of Figure 2B.

Furthermore, the method 20 for operating a wind turbine can be a computer-implemented method 30 or can be a part of the computer-implemented method 30. Consequently, the computer-implemented method 30 can comprise or be the method 20 for operating the wind turbine as indicated in Figure 2B. Moreover, the computer-implemented method 30 can be implemented in a computer program product 40 as also indicated in Figure 2B, so that the computer program product 40 comprises instructions which, when the computer program product 40 is executed by a computer or computer system of more than one computer, cause the computer or computer system to carry out the method 20 for operating the wind turbine. Features and embodiments referring to the method 20 also apply to the computer-implemented method 30 and to the computer program product 40. In particular, the control device 10 or at least parts of the control device 10 can be parts of a computer or computer system carrying out the computer program product 40 and, thus, the computer-implemented method 30 and the method 20.

The wind turbine 1 is operable in various operating conditions, which can be influenced, for example, by the rotation of the nacelle and the pitch of the rotor blades as explained in connection with Figure 1. Each operating condition is characterized by a value of at least one performance parameter of the wind turbine 1, wherein the at least one performance parameters can be at least one parameter influencing a load acting on the wind turbine 1.

Preferably, the at least one performance parameter can be at least one of a generated power, a rotor speed and a rotor torque, which can be controlled by adapting corresponding setpoints that are associated with control commands influencing the mechanical components of the wind turbine 1 like the rotation of the nacelle and the rotor pitch. Consequently, by controlling and adapting the at least one performance parameter, the operating condition of the wind turbine 1 can by controlled and adapted.

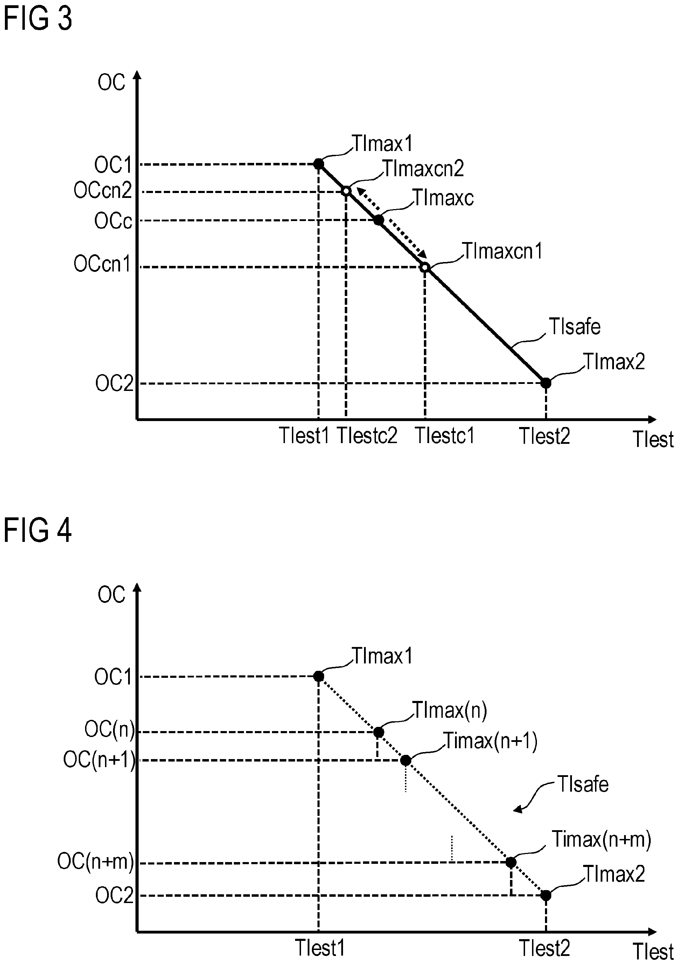

As also explained below in connection with Figures 3 and 4, the operating condition can be controlled continuously or in discrete steps. Accordingly, the at least one performance parameter can be controlled in discrete steps, each step of the at least one performance parameter corresponding to a discrete setpoint of the performance parameter that defines the operating condition. In particular, a finite number of performance parameter setpoints can be predetermined, thereby predetermining a finite number of operating conditions. Alternatively, the at least one performance parameter and, thus, the operating condition can be controlled continuously, so that the at least one performance parameter and, thus, the operating condition can be continuously controlled over said predetermined range. Consequently, the various operating conditions can comprise a continuous range of operating conditions and a change of the operating condition can be carried out continuously.

In a step 21 of the method 20, the current operation condition of the wind turbine 1 is determined. The control device 10 for operating the wind turbine 1 comprises an operating condition determination unit 11 for determining the current operating condition of the wind turbine 1.

In a further step 22, the current wind speed at the location of the wind turbine 1 is estimated. The control device 10 comprises a wind speed estimation unit 12 for estimating the current wind speed at the location of the wind turbine 1. For instance, the wind turbine 1 can be equipped with an anemometer for measuring the wind speed and/or the wind speed can be estimated based on parameters like rotor speed, active power, pitch angle and air density.

A turbulence indicator safety (TI_{safe}) function is associated with the wind turbine 1, the turbulence indicator safety function defining maximum allowable turbulence indicator (TIₘₐₓ) values depending on the operating condition and a wind speed at a location of the wind turbine 1. As explained in the general part, the turbulence indicator used in the method like, for instance, the turbulence indicator of the TI_{safe} function can be an information indicative and/or representative of a wind turbulence and can be, for instance, a turbulence intensity according to the turbulence intensity model described above, i.e., a ratio of the standard deviation of the wind speed to the mean wind speed over a predetermined time interval. However, the turbulence indicator is not limited to that turbulence intensity model and can result from a combination of a turbulence intensity and a wind speed. For instance, the turbulence indicator can be the turbulence intensity multiplied by a function of the wind speed like, for instance, the wind speed to the power of three. The TI_{safe} function defines a limit value of the turbulence indicator that must not be exceed for safe operation of the wind turbine, wherein said limit value depends on the current operating condition of the wind turbine and on the current wind speed. Further explanations about the TI_{safe} function are given below in connection with the Figures 3 and 4.

In a further step 23, the TI_{safe} function is used to evaluate the current TIₘₐₓ value, i.e., the TIₘₐₓ value that is linked to the current operating condition and the current wind speed. The control device 10 for operating the wind turbine 1 comprises an evaluation unit 13 for evaluating the current TIₘₐₓ value linked to the current operating condition and the current wind speed.

In a further step 24, a current turbulence indicator estimation (TIₑₛₜ) value representative of a current wind turbulence at the location of the wind turbine 1 is determined. The control device 10 for operating the wind turbine 1 comprises a calculating unit 14 for determining the current TIₑₛₜ value. For instance, the TIₑₛₜ value can be determined based on the estimated current wind speed, for example when the turbulence indicator depends on the wind speed as described above. However, alternative methods of determining the TIₑₛₜ value, which are not based on the estimated current wind speed, can also be possible. In particular, the current TIₑₛₜ value can be the same signal as used for other functions in the controller as, for instance, a turbulence intensity dependent thrust limiter.

In a further step 25, the current TIₑₛₜ value is compared to the current TIₘₐₓ value. The control device 10 for operating the wind turbine 1 comprises a comparation unit 25 for comparing the current TIₑₛₜ value to the current TIₘₐₓ value. In particular, the comparation unit 25 can determine whether the current TIₑₛₜ value exceeds the current TIₘₐₓ value or not. In case the current TIₑₛₜ value exceeds the current TIₘₐₓ value, the current operating condition can be adapted in a further step 26 to a safe operating condition, associated with a TIₘₐₓ value that is equal to or exceeds the current TIₑₛₜ value for the current wind speed according to the TI_{safe} function. The control device 10 for operating the wind turbine 1 comprises a control unit 26 for adapting the operating condition of the wind turbine 1. Preferably, the safe operating condition corresponds to an operating condition associated with the TIₘₐₓ value which is closest to the TIₑₛₜ value for the current wind speed.

In step 26, the current operating condition is adapted to the safe operating condition by de-rating at least one performance parameter setpoint, in particular by de-rating at least one of the generator power setpoint, the rotor speed setpoint, the rotor torque setpoint and change in a pitch angle. Preferably, the current operating condition is adapted to the safe operating condition by de-rating two performance parameter setpoints, in particular by de-rating two setpoints chosen from the generator power setpoint, the rotor speed setpoint, the rotor torque setpoint and a change in a pitch angle. According to a preferred embodiment, the de-rating of the power setpoint can be realized by a de-rating of the rotor speed setpoint. In order to minimize the risk of resonance and stall, the maximum rotor speed de-rating can be limited, for instance to 10%. Furthermore, in a first range of the de-rating both the rotor speed setpoint and the power setpoint can be reduced together. If further de-rating is needed, this can be achieved, for instance, by a reduction of the rotor torque setpoint.

In case the current TIₑₛₜ value does not exceed the current TIₘₐₓ value in step 25, it can be determined whether it is possible to raise at least one performance parameter setpoint. In other words, it can be determined whether the generated energy should be increased, which means that it can be determined whether there is an operating condition with at least one higher performance parameter setpoint that is associated with a lower TIₘₐₓ value for the current wind speed according to the TI_{safe} function, wherein, however, the TIₑₛₜ value still does not exceed that lower TIₘₐₓ value and, thus, still is a safe operating condition. Consequently, if more power to be generated by the wind turbine is needed, it can be possible that the operating condition is then adapted to that safe operating condition.

Particularly preferably, the steps 21 to 26 are performed continuously as indicated in Figure 2B, so that it is possible to adapt the current operating condition dynamically. If the wind turbine shall be operated to produce the maximum power without the TIₑₛₜ value exceeding the TIₘₐₓ value, preferably the operating condition can be dynamically adapted to a current optimum safe operating condition.

Further features, in particular in connection with the TI_{safe} function, are described in the following in conjunction with Figures 3 and 4. Figure 3 shows a diagram of the interrelation of the TIₑₛₜ value, the operating condition and the TI_{safe} function defining the TIₘₐₓ values for a certain predetermined wind speed. For other wind speeds the following description applies similarly. The horizontal axis, denoted by TIₑₛₜ, represents the TIₑₛₜ value, the vertical axis, denoted by OC, represents the operating condition.

As described above, the TI_{safe} function, denoted by TI_{safe} in the graphs of Figures 3 and 4, is associated with the wind turbine and defines TIₘₐₓ values depending on the operating condition and the wind speed at the location of the wind turbine. In general, the TI_{safe} function is determined by a plurality of predetermined TIₘₐₓ values associated with different wind speeds and/or different operating conditions. For a certain predetermined wind speed, the TI_{safe} function can be determined by at least two predetermined TIₘₐₓ values and their associated operating conditions.

In the graph of Figure 3 a first predetermined TIₘₐₓ value, denoted as TIₘₐₓ₁, for the predetermined wind speed and a first predetermined operating condition, denoted as OC1, and a second predetermined TIₘₐₓ value, denoted as TImax2, for the predetermined wind speed and a second predetermined operating condition, denoted as OC2, different from the first operating condition OC1 are defined. TIₘₐₓ₂ may be determined based on iteration by varying OC2 and TImax2. TIₘₐₓ values other than the at least two predetermined TIₘₐₓ values can be determined by interpolation. The interpolation may be a linear interpolation or a non-linear interpolation. The result is the shown two-dimensional TI_{safe} function that is associated with the certain predetermined wind speed. The same determination can be done for other wind speeds, so that a plurality of two-dimensional TI_{safe} functions can be determined, wherein each of the plurality of two-dimensional TI_{safe} functions is associated with a certain wind speed. In particular, at least two wind speeds and, thus, two two-dimensional TI_{safe} functions are to be determined. By interpolation, for instance linear interpolation, of the wind speed standard deviation, TI_{safe} functions for other wind speeds can be determined, so that the TI_{safe} function for the method described herein can be determined as three-dimensional function providing TIₘₐₓ values depending on the wind speed and the operating condition.

Preferably, the first predetermined operating condition OC1 associated with the first predetermined TIₘₐₓ value TImax1 is a maximum allowable operating condition of the wind turbine determined by a maximum allowable performance parameter setpoint for the associated wind speed. Furthermore, the second predetermined operating condition OC2 can correspond to a safe-mode operating condition in which the wind turbine can be operated independent of the current wind turbulence for the associated wind speed, or the safe-mode operating condition can correspond to a cut-out operation condition of the wind turbine, i.e., the wind turbine is shut down.

Associated with the TIₘₐₓ value TImax1 is a TIₑₛₜ value TIest1 as indicated in the graph of Figure 3. Associated with the TIₘₐₓ value TImax2 is a TIₑₛₜ value TIest2. For current estimated TIₑₛₜ values less than or equal to TIₑₛₜ₁ the wind turbine can be operated in any operating condition up to the maximum operation condition OC1. For current estimated TIₑₛₜ values exceeding TIₑₛₜ₂ the wind turbine can be operated only in the operation condition OC2, which can mean that the wind turbine is shut down.

Consequently, the second TIₘₐₓ value TImax2 can correspond to a predetermined TI_{cutout} value, which can depend on the wind speed, and the method described in connection with Figures 2A and 2B can comprise an additional step of comparing the current TIₑₛₜ value to the predetermined TI_{cutout} value, wherein, in case the current TIₑₛₜ value exceeds the TI_{cutout} value for the current wind speed, the current operating condition is adapted to a safe- operating condition in which the wind turbine may be shut down.

As indicated in Figure 3, the TI_{safe} function can be a continuous function, in particular associated with a continuously adaptable operating condition. In other words, the current operating condition can be adapted to the safe operating condition by continuously adapting at least one performance parameter setpoint.

For instance, the wind turbine is operated in the current operating condition OC_{c}. A current TIₘₐₓ value TI_{maxc} is associated with the current operating condition OC_{c} for the current wind speed. Now we assume that in step 24 of the method described in connection with Figures 2A and 2B a current TIₑₛₜ value TIestc1 is estimated that is found, in step 25, to exceed the current TIₘₐₓ value TI_{maxc}. The load on the wind turbine, due to wind turbulence, decreases as the operating condition is changed from operating condition OC₁ to operating condition OC₂. As described in connection with Figures 2A and 2B, the operating condition now has to be adapted to a safe operating condition OCcn1 associated with a TIₘₐₓ value TImaxcn1 that is not exceeded by the current estimated TIₑₛₜ value TIestc1. This can be achieved by a continuous de-rating of the at least one performance parameter setpoint. On the other hand, if in step 24 of the method described above, a current TIₑₛₜ value TI_{estc2} is estimated that is found, in step 25, to be less than the current TIₘₐₓ value TI_{maxc}, it can be checked whether, due to other reasons like demanded power generation, it would be suitable to increase the at least one performance parameter setpoint, corresponding to adapting to the current operating condition OC_{c} another operating condition OC_{cn2} associated with a lower TIₘₐₓ value TI_{maxcn2} for the current wind speed, wherein, however, the current TIₑₛₜ value TI_{estc2} still does not exceed that lower TIₘₐₓ value TImaxcn2 and, thus, can still be a safe operating condition but a higher power generation.

Alternatively, in particular in case the operating condition is operated in steps by adapting the at least one performance parameter setpoint in a step-wise fashion, i.e., in discrete steps, the TI_{safe} function can be a step function as indicated in Figure 4. In addition to the TIₘₐₓ values TIₘₐₓ₁ and TIₘₐₓ₂ associated with the operating conditions OC₁ and OC₂, the TI_{safe} function comprises further discrete TIₘₐₓ values TIₘₐₓ₍ₙ₎, TIₘₐₓ₍ₙ₊₁₎,..., TIₘₐₓ₍ₙ₊ₘ₎, associated with the discrete operating conditions OC₍ₙ₎, OC₍ₙ₊₁₎,..., OC₍ₙ₊ₘ₎, with n > 2 and m ≥ 0.

The features and embodiments described in connection with the figures can also be combined with one another, even if not all such combinations are explicitly described. Furthermore, the embodiments described in connection with the figures may have additional and/or alternative features according to the description in the general part.

The invention is not limited by the description based on the embodiments to these embodiments. Rather, the invention includes each new feature and each combination of features, which includes in particular each combination of features in the patent claims, even if this feature or this combination itself is not explicitly explained in the patent claims or embodiments.

### Reference signs

- 1: wind turbine
- 2: rotor
- 3: tower
- 4: foundation
- 5: nacelle
- 6: rotor blade
- 7: rotor hub
- 8: wind turbine controller
- 10: control device
- 11: operating condition determination unit
- 12: wind speed estimation unit
- 13: evaluation unit
- 14: calculating unit
- 15: comparation unit
- 16: control unit
- 20: method
- 21, 22, 23, 24, 25, 26: method steps
- 30: computer-implemented method
- 40: computer program product

## Claims

1. A method for operating a wind turbine (1),
wherein the wind turbine (1) is operable in various operating conditions, each operating condition being **characterized by** a value of at least one performance parameter of the wind turbine (1),
wherein a turbulence indicator safety function is associated with the wind turbine (1), the turbulence indicator safety function defining maximum allowable turbulence indicator (TIₘₐₓ) values depending on the operating condition and a wind speed at a location of the wind turbine (1),
wherein the method comprises at least the following steps:
A) determining the current operating condition of the wind turbine (1),
B) estimating the current wind speed at the location of the wind turbine (1),
C) evaluating a current TIₘₐₓ value linked to the current operating condition and the current wind speed by using the turbulence indicator safety function,
D) determining a current turbulence indicator estimation (TIₑₛₜ) value representative of a current wind turbulence at the location of the wind turbine (1),
E) comparing the current TIₑₛₜ value to the current TIₘₐₓ value, wherein, in case the current TIₑₛₜ value exceeds the current TIₘₐₓ value, the current operating condition is adapted to a safe operating condition, associated with a TIₘₐₓ value that is equal to or exceeds the current TIₑₛₜ value for the current wind speed according to the turbulence indicator safety function.

2. The method according to claim 1, wherein, in step E, the safe operating condition corresponds to an operating condition associated with the TIₘₐₓ value which is closest to the TIₑₛₜ value for the current wind speed.

3. The method according to claim 1 or 2, wherein steps A to E are performed continuously, so that the current operating condition can be adapted dynamically.

4. The method according to one of the preceding claims, wherein the at least one performance parameter is a parameter influencing a load acting on the wind turbine (1), wherein, in particular, the at least one performance parameter comprises at least one of a generated power, a rotor speed and a rotor torque.

5. The method according to one of the preceding claims, wherein, in step E, the current operating condition is adapted to the safe operating condition by de-rating at least one performance parameter setpoint, in particular by de-rating at least one of a generator power setpoint, a rotor speed setpoint, a rotor torque setpoint and change in a pitch angle.

6. The method according to one of the preceding claims, wherein the turbulence indicator safety function is determined by a plurality of predetermined TIₘₐₓ values associated with different wind speeds and/or different operating conditions.

7. The method according to claim 6, wherein TIₘₐₓ values other than the at least two predetermined TIₘₐₓ values are determined by an interpolation.

8. The method according to claim 7, wherein the interpolation is a linear interpolation or a non-linear interpolation.

9. The method according to one of the claims 6 to 8, wherein the first predetermined operating condition is a maximum allowable operating condition of the wind turbine determined by a maximum allowable performance parameter value.

10. The method according to one of the claims 6 to 9, wherein the second predetermined operating condition corresponds to a safe-mode operating condition in which the wind turbine (1) can be operated independently of the current wind turbulence.

11. The method according to claim 10, wherein the safe-mode operating condition corresponds to a cut-out of the wind turbine (1).

12. The method according to one of the preceding claims, further comprising the step of comparing the current TIₑₛₜ value to a TI_{cutout} value for the current wind speed, and, in case the current TIₑₛₜ value exceeds the TI_{cutout} value for the current wind speed, the current operating condition is adapted to a cut-out operating condition in which the wind turbine is shut down.

13. The method according to one of the claims 1 to 12, wherein the turbulence indicator safety function is a continuous function.

14. The method according to one of the claims 1 to 12, wherein the turbulence indicator safety function is a step function.

15. The method according to one of the preceding claims, wherein the current TIₑₛₜ value is determined based on the estimated current wind speed.

16. A control device (10) for operating a wind turbine (1) by performing a method according to any one of the claims 1 to 15, wherein the control device (10) comprises:
- an operating condition determination unit (11) for determining the current operating condition of the wind turbine (1),
- a wind speed estimation unit (12) for estimating the current wind speed,
- an evaluation unit (13) for evaluating the current TIₘₐₓ value linked to the current operating condition and the current wind speed,
- a calculating unit (14) for determining the current TIₑₛₜ value,
- a comparation unit (15) for comparing the current TIₑₛₜ value to the current TIₘₐₓ value,
- a control unit (16) for adapting the operating condition of the wind turbine (1).

17. A computer-implemented method (30), comprising the method (30) according to any one of the claims 1 to 15.

18. A computer program product (40) comprising instructions which, when the computer program product (40) is executed by a computer or computer system, cause the computer or computer system to carry out the method (20) according to any one of the claims 1 to 15.
